# EUROPÄISCHE PATENTSCHRIFT

(11) **EP 3 810 443 B1**
(45) Veröffentlichungstag und Bekanntmachung des Hinweises auf die Patenterteilung: **11.03.2026**
(21) Anmeldenummer: 19729475.4
(22) Anmeldetag: 03.06.2019
(51) Int. Cl.: B60D 1/01, B60D 1/24, B60D 1/62, B62D 53/08, B60T 8/24, B62D 15/02

(54) **SENSORSYSTEM FÜR EIN NUTZFAHRZEUG UND SATTELKUPPLUNGSSYSTEM SOWIE NUTZFAHRZEUG DAMIT UND VERFAHREN DAFÜR**
SENSOR SYSTEM FOR A UTILITY VEHICLE AND FIFTH-WHEEL COUPLING SYSTEM, UTILITY VEHICLE COMPRISING SAID SENSOR SYSTEM, AND METHOD FOR SAME
SYSTÈME DE CAPTEUR POUR UN VÉHICULE UTILITAIRE ET SYSTÈME DE SELLETTE D'ATTELAGE AINSI QUE VÉHICULE UTILITAIRE LE COMPRENANT ET PROCÉDÉ ASSOCIÉ

(30) Priorität: 20.06.2018 DE 102018114851
(43) Veröffentlichungstag der Anmeldung: 28.04.2021
(73) Patentinhaber: ZF CV Systems Europe BV, 1170 Brussels (BE)
(72) Erfinder: WULF, Oliver, 31535 Neustadt (DE); PLÄHN, Klaus, 30926 Seelze (DE)
(74) Vertreter: Rabe, Dirk-Heinrich
(86) Internationale Anmeldenummer: PCT/EP2019/064275
(87) Internationale Veröffentlichungsnummer: WO 2019/243025

(56) Entgegenhaltungen:
- EP-A1- 2 899 101
- DE-A1- 102010 033 641
- DE-A1- 102014 224 425
- DE-A1- 102016 012 663
- US-A- 5 001 639
- US-A1- 2018 057 052
- US-B2- 9 027 949

## Beschreibung

Die Erfindung betrifft den Bereich der Nutzfahrzeuge und insbesondere das Gebiet der Bestimmung eines Knickwinkels zwischen einem Nutzfahrzeug und einem von dem Nutzfahrzeug gezogenen Fahrzeuganhänger.

Im Bereich der Nutzfahrzeuge ist es bekannt, Messwerte aufzunehmen, um einen Betriebs- oder Fahrzustand des Nutzfahrzeugs selbst oder auch eines vom Nutzfahrzeug gezogenen Fahrzeuganhängers zu bestimmen. Die Messwerte über den aktuellen Betriebs- oder Fahrzustand können dann in Fahrassistenz- oder Sicherheitssystemen verwendet werden, um den Fahrzeugführer zu unterstützen, zu informieren oder beim Auftreten von instabilen oder unsicheren Zuständen diesen automatisch entgegenzuwirken.

Neben dem direkten Bestimmen von Messwerten mit Sensoren ist es auch bekannt, Variablen oder variable Größen indirekt mithilfe anderer gemessener Messwerte oder bekannter Größen zu schätzen oder mithilfe dieser zu modellieren. Ein Beispiel hierfür ist das Bestimmen eines Knickwinkels zwischen einem Nutzfahrzeug und einem von dem Nutzfahrzeug gezogenen Fahrzeuganhänger. Ein derartiger Knickwinkel wird beispielsweise unter Berücksichtigung der gemessenen Geschwindigkeit, gemessener Gierraten des Nutzfahrzeugs sowie fester geometrischer Parameter modelliert. Der so bestimmte Knickwinkel kann beispielsweise in Sicherheitssystemen des Fahrzeugs, wie beispielsweise einer elektronischen Stabilitätskontrolle (ESP), berücksichtigt werden.

Vorzugsweise dient die Überwachung eines Knickwinkels auch, dazu um einen Fahrzeugführer zu warnen, wenn der Fahrzeuganhänger gegenüber dem Nutzfahrzeug, beispielsweise bei Rückwärtsfahrt durch enge Kurven, zu stark eingeknickt ist. Hierdurch kann beispielsweise ein Abreißen von Verbindungskabeln oder Verbindungsleitungen zwischen dem Nutzfahrzeug und dem Fahrzeuganhänger vermieden werden, wenn der Fahrzeugführer auf die Warnung reagiert.

Zudem kann ein ermittelter Knickwinkel zwischen einem Nutzfahrzeug und einem Fahrzeuganhänger verwendet werden, um ein teilweise autonomes Fahren des Nutzfahrzeugs, an das ein Fahrzeuganhänger angekuppelt ist, auch in einer Rückwärtsfahrrichtung zu ermöglichen.

Aus dem Stand der Technik sind Sensoranordnungen oder Sensorsysteme bekannt, um gegenüber durch die Modellierung indirekt bestimmten absoluten Knickwinkeln auch eine direkte Knickwinkelmessung zu ermöglichen.

Derartige Sensoren können beispielsweise als optische Sensoren realisiert werden, wobei diese den Nachteil aufweisen, dass diese durch Verschmutzung keine oder teilweise fehlerhafte Messwerte liefern. Weiterhin sind Sensoren bekannt, die am Nutzfahrzeug angeordnet sind und in direktem Kontakt mit dem Fahrzeuganhänger, zum Beispiel durch ein Rad, stehen. So lässt sich durch diese Sensoren zumindest eine relative Bewegung der Fahrzeuge zueinander messen.

Die zuletzt genannten Sensoren sind jedoch häufig nur in einem bestimmten Messbereich des Knickwinkels einsetzbar, da Bereiche, in denen ausschließlich der Knickwinkel unabhängig zu anderen relativen Bewegung zwischen Fahrzeuganhänger und Nutzfahrzeug messbar ist, nur sehr eingeschränkt zur Verfügung stehen.

In EP 0 471 286 B1 ist beispielsweise beschrieben, einen Rollensensor in eine Öffnung einer Sattelplatte einer Sattelkupplung zu integrieren. Eine derartige Lösung birgt jedoch einerseits die Problematik, dass eine Stabilität der Sattelplatte aufgrund der Öffnung durch zusätzliche Verstärkung sichergestellt werden muss. Andererseits ist eine vorhandene Anhängerkupplung, die beispielsweise als Sattelkupplung ausgestaltet ist, durch diese Lösung nicht nachrüstbar, da eine stabilitätsreduzierende Öffnung für den Sensor nicht ohne Weiteres eingebracht werden kann.

Aufgabe der vorliegenden Erfindung ist es daher, ein Sensorsystem zu finden, das den Problemen des Standes der Technik begegnet. Insbesondere soll ein Sensorsystem gefunden werden, das nachrüstbar ist, ohne die Stabilität einer vorhandenen Anhängerkupplung zu reduzieren.

Hierzu betrifft die Erfindung ein Sensorsystem zum Bestimmen einer Winkeländerung zwischen dem Nutzfahrzeug und einem Fahrzeuganhänger. Das Nutzfahrzeug ist zum Beispiel eine Sattelzugmaschine und der Fahrzeuganhänger beispielsweise ein Sattelauflieger. Das Sensorsystem umfasst eine Sensoreinheit, eine Halterung und einen Positioniermechanismus.

Die Sensoreinheit umfasst ein Rad, das um eine Achse drehbar gelagert ist, und einen Drehgeber, der mit dem Rad verbunden ist, um eine Lageänderung des Rades zu detektieren. Der Begriff Rad ist hier gewählt, um allgemein einen Rotationskörper zu beschreiben, der um eine Achse drehbar ist. Somit stellt der Begriff keine Einschränkung der geometrischen Form dar. Das Rad umfasst beispielsweise auch einen auf einer Drehachse gelagerten Kugelkörper oder dergleichen.

Die Halterung umfasst zumindest einen ersten feststehenden Teil zum Anbringen des Systems an dem Nutzfahrzeug oder einem Teil des Nutzfahrzeugs und zumindest einen beweglichen Teil, der mit der Sensoreinheit verbunden und am feststehenden Teil beweglich gelagert ist. Der bewegliche Teil ist vorzugsweise drehbar am feststehenden Teil gelagert. Gemäß einer alternative ist der bewegliche Teil linear verschiebbar am feststehenden Teil gelagert.

Die US20180057052A1 beschreibt eine Anhängerwinkelmessanordnung, die einen Winkel eines Anhängers relativ zu einem Zugfahrzeug misst, umfassend eine Montagebasis, einen Anker, ein Rollenrad und einen Drehgeber. Die Montagebasis ist dazu konfiguriert, selektiv an den Anhänger gekoppelt zu werden. Der Anker ist um einen Drehpunkt drehbar mit der Befestigungsbasis verbunden. Das Rollenrad ist drehbar mit dem Anker verbunden und für einen drehbaren Eingriff mit dem Anhänger positioniert. Der Drehcodierer misst die Drehung des Rollenrads und erzeugt ein Signal basierend auf der gemessenen Drehung, das eine Winkelposition des Anhängers relativ zum Zugfahrzeug anzeigt.

Die DE102016012663A1 offenbart eine Kopplungseinrichtung für einen ein Zugfahrzeug und einen Anhänger umfassenden Lastzug, mit einem als Sattelplatte oder als Maulkupplung ausgebildeten zugfahrzeugseitigen Teil und einem als Königszapfen oder als Kupplungsauge ausgebildeten anhängerseitigen Teil der Kopplungseinrichtung, welche in einem Anhängerbetrieb miteinander gekoppelt sind, und mit einer Sensoreinrichtung zur Sensierung eines Knickwinkels zwischen dem zugfahrzeugseitigen Teil und dem anhängerseitigen Teil der Kopplungseinrichtung. Um die die Sensierung des Knickwinkels anhängerunabhängig zu ermöglichen, ist ein Sensorteil der Sensoreinrichtung kraftschlüssig mit dem Königszapfen oder dem Kupplungsauge gekoppelt.

Der Positioniermechanismus ist eingerichtet, das bewegliche Teil zumindest in einer Betriebsposition, vorzugsweise eines Betriebspositionsbereichs, zu lagern. Diese Lagerung ist als gefederte Lagerung ausgeführt. Der bewegliche Teil ist also gefedert gelagert, sodass in Abhängigkeit einer auf die Federung ausgeübten Kraft der bewegliche Teil in verschiedenen Positionen innerhalb des Betriebspositionsbereichs durch den Positioniermechanismus angeordnet ist. Hierbei dient der Positioniermechanismus zum Lagern des beweglichen Teils, zumindest in der Betriebsposition, insbesondere, sodass das Rad der mit dem beweglichen Teil verbundenen Sensoreinheit mit einer Federkraft in Kontakt mit einem Fahrzeuganhänger bringbar ist.

Die Betriebsposition bezeichnet hierbei insbesondere die Position des Rades, sodass der um das Rad verlaufende Kontaktbereich in einer Ebene mit der Auflagefläche oder Reibbelägen der Auflagefläche liegt.

Hierbei macht sich die Erfindung die Kenntnis zunutze, dass üblicherweise ein Kontaktbereich des Fahrzeuganhängers, also ein Bereich einer Kontaktplatte des Fahrzeuganhängers, der angepasst ist, auf einer Auflagefläche einer Anhängerkupplung aufzuliegen, in der Regel größer gewählt ist als die Auflagefläche selbst.

Dieser Kontaktbereich des Fahrzeuganhängers ist in der Regel eben und frei von Unebenheiten ausgebildet, sodass in diesem Kontaktbereich vorteilhafterweise das Rad der Sensoreinheit ungestört eine relative Bewegung zwischen dem Nutzfahrzeug und dem Fahrzeuganhänger detektieren kann. Die Halterung ist somit in einfacher Art und Weise nachträglich an eine vorhandene Anhängerkupplung anbringbar bzw. nachrüstbar, ohne dass zusätzliche Stabilitätsmaßnahmen oder aufwändige Bearbeitungen der Anhängerkupplung nötig sind.

Gemäß einer Ausführungsform ist die Halterung angepasst, das Rad der Sensoreinheit, insbesondere wenn der bewegliche Teil in der Betriebsposition ist, außerhalb einer Auflagefläche der Anhängerkupplung, aber nahe der Auflagefläche, nämlich vorzugsweise in einem Abstand zur Auflagefläche von weniger als 0,2 m oder weniger als 0,1 m, anzuordnen. Der Abstand ist vorzugsweise als Abstand zwischen einer Kontur der Auflagefläche und einer um das Rad verlaufenden Kontaktfläche des Rades zum Herstellen eines Kontakts mit dem Fahrzeuganhänger definiert.

Gemäß einer Ausführungsform ist der Positioniermechanismus eingerichtet, den beweglichen Teil der Halterung aus der Betriebsposition in eine Ruheposition zu überführen und/oder in der Ruheposition zu lagern, die unterschiedlich zur Betriebsposition ist und insbesondere außerhalb des Betriebspositionsbereichs liegt. Hierbei ist die Ruheposition so gewählt, dass vorzugsweise das Rad der mit dem beweglichen Teil verbundenen Sensoreinheit beabstandbar zu dem Fahrzeuganhänger anordenbar ist. Hierdurch wird es ermöglicht, dass beim An- und Abkuppeln ein sich nähernder Teil oder Kupplungsteil des Fahrzeuganhängers oder ein sich entfernender Teil oder Kupplungsteil des Fahrzeuganhängers eine Kraft auf das Rad mit einer Querkomponente zur Drehachse ausübt, die zu einer Beschädigung führen könnte.

Das Rad kann also zum An- und Abkuppeln des Fahrzeuganhängers vorzugsweise mittels des Positioniermechanismus in die Ruheposition überführt werden, sodass ein für das Sensorsystem beschädigungsfreies An- und Abkuppeln eines Fahrzeuganhängers an das Nutzfahrzeug möglich ist.

Gemäß einer Ausführungsform ist die Halterung eingerichtet, im Bereich oder mit einer als Sattelkupplung ausgebildeten Anhängerkupplung verbunden zu werden, die eine Sattelplatte mit einem Haltebereich aufweist, in der ein Königszapfen einkuppelbar ist. Die Halterung ist hierbei derart angepasst, das Rad der Sensoreinheit zumindest im Betriebspositionsbereich in einem Abstand zum Haltebereich zu halten, der geringer ist als der maximale Abstand einer Kontur der Auflagefläche zum Haltebereich.

Somit wird immer sichergestellt, dass das Rad der Sensoreinheit im Betriebspositionsbereich sicher mit einer Kontaktfläche des Fahrzeuganhängers für eine Sattelkupplung unabhängig vom Knickwinkel in Kontakt steht. Hierbei wird ausgenutzt, dass die Kontaktfläche des Fahrzeuganhängers zum Kontaktieren mit der Sattelkupplung, die auch als Bereich einer Grundplatte bezeichnet werden kann, mindestens einen Durchmesser aufweist, sodass die Kontaktfläche jedenfalls am breitesten Bereich der Auflagefläche mit der gesamten Auflagefläche in Kontakt steht. Somit ist an schmaleren Bereichen der Auflagefläche, an denen das Rad gemäß diesem Ausführungsbeispiel anordenbar ist, selbst im Falle einer Drehbewegung ein Teil der Grundplatte in Verbindung mit dem Rad der Sensoreinheit, sodass immer eine Messung der relativen Bewegung des Fahrzeuganhängers zum Nutzfahrzeug möglich ist.

Gemäß einer weiteren Ausführungsform ist die Halterung angepasst, im Bereich einer mit einer als Sattelkupplung ausgebildeten Anhängerkupplung des Nutzfahrzeugs verbunden zu werden, sodass das Rad durch den beweglichen Teil der Sensoreinheit zumindest in der Betriebsposition vor der Auflagefläche gegenüber einem Mündungsbereich einer bis zu einem Haltebereich führenden Führung der Sattelkupplung für einen Königszapfen oder im Bereich der Führung selbst anordenbar ist. Hierbei ist die Halterung insbesondere derart angepasst, sodass zumindest in der Betriebsposition die Achse des Rades radial zum Haltebereich verläuft.

Hierbei wird die Kenntnis ausgenutzt, dass der Rand der Auflagefläche oder die Kontur der Auflagefläche einer Sattelkupplung auf der Vorderseite der Sattelkupplung, die der Seite entspricht, die vor der Auflagefläche gegenüber einem Mündungsbereich liegt, einen geringeren Abstand zum Haltebereich aufweist als an den Seitenbereichen. Da die Kontaktflächen von Fahrzeuganhängers wenigstens so groß ausgebildet sind, dass diese im gesamten Kontakt mit der Auflagefläche einer Sattelkupplung stehen, ist demnach auf der Vorderseite der Sattelkupplung, die zur Materialersparnis weniger massiv ausgebildet ist, ein Bereich vorhanden, der grundsätzlich von der Kontaktfläche des Fahrzeuganhängers überstrichen wird. Eine Anordnung des Rades der Sensoreinheit in diesem Bereich stellt somit sicher, dass, auch wenn die Kontaktfläche eines Fahrzeuganhängers gerade die maximale Breite der Auflagefläche der Sattelkupplung aufweist, jedenfalls der vordere Bereich vor der Sattelkupplung bei großer Drehbewegung durch die Kontaktfläche eines Fahrzeuganhängers auf der Auflagefläche überstrichen wird, sodass die Drehbewegung sicher durch das Rad detektierbar ist.

Gemäß einer weiteren Ausführungsform ist der feststehende Teil der Halterung angepasst, mit Bolzen einer Sattelkupplung befestigt zu werden, die zur Befestigung von Reibbelägen dienen. Demnach werden vorhandene Bolzen der Sattelkupplung, mit denen Reibbeläge befestigt sind und die zum Tausch der Reibbeläge leicht entfernbar sind, verwendet, um hierdurch zusätzlich den feststehenden Teil der Halterung zu befestigen. Anstatt einer direkten Verwendung der vorhandenen Bolzen werden alternativ diese Bolzen durch lange Bolzen ersetzt. Die Halterung ist demnach an die vorhandene Position dieser Bolzen angepasst, sodass ohne zusätzliche weitere Bauteile das Sensorsystem in einfacher Art und Weise an einer Sattelkupplung befestigbar ist. Die Bolzen werden gemäß einer bevorzugten Ausführungsform mittels Hülsen verstärkt oder verlängert, um Elastizitäten in der Halterung zu reduzieren.

Erfindungsgemäß weist der Positioniermechanismus ein Verbindungsteil auf. Das Verbindungsteil ist angepasst, mit einem Schließmechanismus, insbesondere einem Betätigungshebel für den Schließmechanismus, der Anhängerkupplung des Fahrzeugs verbunden zu werden. Vorzugsweise ist das Verbindungsteil daher so angepasst, dass durch Betätigen des Betätigungshebels des Schließmechanismus der bewegliche Teil zwischen einer Betriebsposition und der Ruheposition überführbar ist.

Hierbei wird sichergestellt, dass erst, wenn ein Fahrzeuganhänger mit einem Nutzfahrzeug durch Betätigung des Schließmechanismus festgekuppelt wird, automatisch, nämlich durch das Verbindungsteil und den Positioniermechanismus damit, der bewegliche Teil in eine Betriebsposition überführt wird. Zuvor verbleibt die Sensoreinheit und insbesondere das Rad der Sensoreinheit in seiner Ruheposition, sodass kein Kontakt zwischen dem Fahrzeuganhänger und dem Rad besteht und somit keine Kräfte mit einer Querkomponente zur Drehachse des Rades auf das Rad der Sensoreinheit ausgeübt werden, die möglicherweise zur Beschädigung der Sensoreinheit führen können.

Gemäß einer weiteren Ausführungsform umfasst der Positioniermechanismus eine Justiereinrichtung. Diese Justiereinrichtung ist vorzugsweise Bestandteil des Verbindungsteils. Die Justiereinrichtung dient zum Variieren der Betriebsposition und/oder der Ruheposition und/oder der Federkraft bei der gefederten Lagerung des beweglichen Teils. Somit kann ein Verbindungsteil, das mit einem Schließmechanismus einer Anhängerkupplung eines Nutzfahrzeugs verbunden ist, an die Ausgestaltung des Schließmechanismus, insbesondere des Betätigungshebels, sowie den Hebelweg angepasst werden, sodass das Sensorsystem für eine Vielzahl von unterschiedlichen Anhängerkupplungen ohne konstruktive Änderungen allein durch Justieren mit der Justiereinrichtung angepasst werden kann.

Gemäß einer weiteren Ausführungsform ist der Drehgeber ein inkrementeller Drehgeber, insbesondere ein Inkrementalgeber, oder ein absoluter Drehgeber. Außerdem oder zusätzlich ist der Drehgeber eingerichtet, ein pulsweitenmoduliertes Signal (PWM-Signal) mit Laufrichtungserkennung, insbesondere ein A/B-Signal, oder ein Datensignal, insbesondere ein Bussignal, vorzugsweise ein CAN-Bussignal, in Abhängigkeit einer Lageänderung auszugeben.

Außerdem betrifft die Erfindung ein Sattelkupplungssystem mit einer Sattelkupplung und einem Sensorsystem nach einer der vorgenannten Ausführungsformen. Hierbei ist der feststehende Teil der Halterung des Sensorsystems mit der Sattelkupplung verbunden. Außerdem ist durch die Halterung zumindest in der Betriebsposition das Rad der Sensoreinheit außerhalb einer Auflagefläche der Sattelkupplung nahe der Auflagefläche angeordnet. Zudem ist das Rad zumindest in der Betriebsposition mit der Halterung außerhalb der Auflagefläche der Anhängerkupplung neben der Auflagefläche angeordnet. Vorzugsweise ist das Rad derart angeordnet, dass die Kontaktfläche des Rades in der Betriebsposition in einer durch die Auflagefläche gebildeten Ebene in einem Bereich liegt, der von einer Grundplatte des Fahrzeuganhängers überstreichbar ist.

Gemäß einer Ausführungsform des Sattelkupplungssystems beträgt der Abstand zwischen Auflagefläche und dem Rad weniger als 0,2 m oder weniger als 0,1 m.

Gemäß einer Ausführungsform ist die Halterung im Bereich oder mit der Sattelkupplung verbunden. Die Sattelkupplung weist einen Haltebereich auf, in dem ein Königszapfen einkuppelbar ist. Außerdem ist das Rad der Sensoreinheit zumindest in der Betriebsposition in einem Abstand zum Haltebereich durch die Halterung angeordnet, der geringer als der maximale Abstand einer Kontur der Auflagefläche der Sattelkupplung zum Haltebereich ist.

Gemäß einer weiteren Ausführungsform ist die Halterung im Bereich der oder mit der Sattelkupplung verbunden, sodass das Rad durch den beweglichen Teil der Sensoreinheit zumindest in der Betriebsposition vor der Auflagefläche gegenüber dem Mündungsbereich der bis zu dem Haltebereich führenden Führung der Sattelkupplung für den Königszapfen oder im Bereich der Führung angeordnet ist. Die Achse des Rades verläuft hierbei, wie im Übrigen insbesondere bei allen Ausführungsformen der Erfindung auch, in der Betriebsposition radial zum Haltebereich oder zum Zentrum, insbesondere zu einer durch das Zentrum verlaufenden Achse, des Haltebereichs.

Gemäß einer weiteren Ausführungsform weist die Sattelkupplung einen Schließmechanismus auf, der eingerichtet ist, einen Königszapfen eines Fahrzeuganhängers mit der Sattelkupplung einzukuppeln oder freizugeben. Der Schließmechanismus ist mit dem Verbindungsteil der Positionieranordnung des Sensorsystems verbunden.

Gemäß einer weiteren Ausführungsform weist die Sattelkupplung Bolzen zur Befestigung von Reibbelägen auf. Der feststehende Teil der Halterung ist mit den Bolzen an der Sattelkupplung befestigt.

Außerdem umfasst die Erfindung ein Nutzfahrzeug mit einem Sattelkupplungssystem nach einer der vorgenannten Ausführungsformen.

Weiterhin betrifft die Erfindung ein Verfahren zum Anbringen eines Sensorsystems nach einer der vorgenannten Ausführungsformen an eine Sattelkupplung für ein Nutzfahrzeug. Hierzu wird der feststehende Teil der Halterung des Sensorsystems mit den Bolzen zur Befestigung von Reibbelägen der Sattelkupplung verbunden. Außerdem wird ein Verbindungsteil der Positionieranordnung mit einem Schließmechanismus der Sattelkupplung verbunden.

Gemäß einer Ausführungsform des Verfahrens zum Anordnen des Sensorsystems wird eine Betriebsposition und/oder eine Ruheposition und/oder eine Federkraft der Feder bei der gefederten Lagerung in der Betriebsposition eines beweglichen Teils der Halterung des Sensorsystems mit einer Justiereinrichtung des Sensorsystems eingestellt.

Außerdem betrifft die Erfindung ein Verfahren zum Kuppeln eines Sattelaufliegers mit einem Sattelzug. Hierbei wird zunächst ein Königszapfen eines Sattelaufliegers in eine Sattelkupplung des Sattelzugs eingeführt. Daraufhin wird die Sattelkupplung mittels eines Schließmechanismus verriegelt und der bewegliche Teil einer Halterung eines Sensorsystems nach einer der vorgenannten Ausführungsformen von einer Ruheposition in eine Betriebsposition überführt.

Gemäß einer Ausführungsform des Verfahrens zum Kuppeln erfolgt das Überführen des beweglichen Teils durch das Verriegeln.

Weitere Ausführungsformen ergeben sich anhand der in den Figuren näher erläuterten Ausführungsbeispiele. Hierbei zeigt
- Fig. 1: ein Nutzfahrzeug mit einem Fahrzeuganhänger,
- Fig. 2: einen Sattelzug mit einem Sattelauflieger,
- Fig. 3: eine Sattelkupplung in der Draufsicht,
- Fig. 4: eine Sattelkupplung aus einer Ansicht von unten,
- Fig. 5: ein mit der Sattelkupplung verbundenes Sensorsystem aus einer Ansicht von unten auf die Sattelkupplung,
- Fig. 6: eine perspektivische Ansicht eines Sattelkupplungssystems,
- Fig. 7: eine Ansicht des Sensorsystems in einer Ruheposition,
- Fig. 8: eine Ansicht des Sensorsystems in einer Betriebsposition,
- Fig. 9: die Schritte eines Verfahrens zum Anbringen eines Sensorsystems an eine Sattelkupplung und
- Fig. 10: die Schritte eines Verfahrens zum Ankuppeln eines Fahrzeuganhängers an ein Nutzfahrzeug.

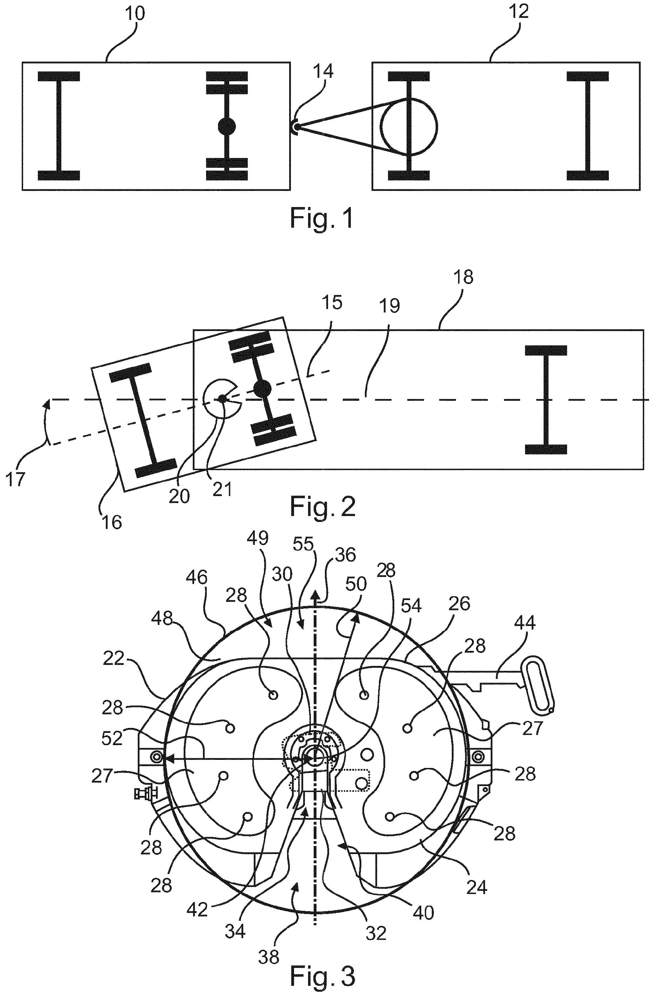

Fig. 1 zeigt ein Nutzfahrzeug 10, das mit einem Fahrzeuganhänger 12 über eine Anhängerkupplung 14 verbunden ist. Das Nutzfahrzeug 10 weist einen nicht dargestellten Antrieb auf, mit dem das Nutzfahrzeug 10 antreibbar ist und den daran angekuppelten Fahrzeuganhänger 12 bei einer Vorwärtsfahrt zieht oder bei einer Rückwärtsfahrt schiebt.

Fig. 2 zeigt ebenfalls ein Nutzfahrzeug 10, das hier jedoch als Sattelzugmaschine 16 ausgebildet ist. Die Sattelzugmaschine 16 zieht ebenfalls einen Fahrzeuganhänger 12, der hier jedoch als Sattelauflieger 18 ausgebildet ist. Der Sattelauflieger 18 ist mit der Sattelzugmaschine 16 ebenfalls über eine Anhängerkupplung 14 gekuppelt, die in Fig. 2 jedoch als Sattelkupplung 20 ausgebildet ist. Die Sattelkupplung 20 ist an der Sattelzugmaschine 16 angeordnet und hält einen Königszapfen 21 des Sattelaufliegers 18, sodass die Sattelzugmaschine 16 mittels der Sattelkupplung 20 und dem darin eingekuppelten Königszapfen 21 den Sattelauflieger 18 bei einer Vorwärtsfahrt ziehen und bei einer Rückwärtsfahrt schieben kann. Fig. 2 zeigt die Sattelzugmaschine 16 und den Sattelauflieger 18 bei einer Fahrt in einer Linkskurve. Hieraus resultiert beispielsweise eine Winkeländerung 17 zwischen Sattelzugmaschine 16 und Sattelauflieger 18. Die Winkeländerung 17 wird als Knickwinkel oder Knickwinkeländerung bezeichnet und entspricht dem Winkel zwischen den Längssachsen der Fahrzeuge, also den Fahrzeuglängssachen, hier also der Längsachse 15 der Sattelzugmaschine 16 und der Längsachse 19 des Sattelaufliegers 18.

Fig. 3 zeigt eine Draufsicht auf eine Sattelkupplung 20. Die Sattelkupplung weist eine Sattelplatte 22 auf, die an ihrer Oberseite eine Auflagefläche 24 aufweist. Die Auflagefläche 24 umfasst eine Kontur 26, innerhalb derer die Auflagefläche 24 vorzugsweise im Wesentlichen eben ausgebildet ist. Die Auflagefläche 24 weist Reibbeläge 27 auf, die mit Bolzen 28 an der Sattelplatte 22 befestigt und austauschbar sind. Im Zentrum der Sattelplatte 22 ist ein Haltebereich 30 vorgesehen, um den Königszapfen 21 aufzunehmen und im Haltebereich 30 einzukuppeln. Das Einkuppeln oder Halten erfolgt über einen Riegel 32 eines Schließmechanismus 34.

Demnach ist der Königszapfen 21 in einer Längsrichtung 36 über einen Mündungsbereich 38 sowie eine an den Mündungsbereich 38 anschließende Führung40 in den Haltebereich 30 einführbar, während der Riegel 32 weggeklappt ist. Der Königszapfen 21 drückt dann auf eine Platte 42, sodass der Riegel 32 in die dargestellte Position drehen kann. Der Riegel 32 wird dann über den Schließmechanismus 34 mittels eines Betätigungshebels 44 verriegelt. Zum Freigeben des Königszapfens 21 wird der Betätigungshebel 44 wiederum in eine andere Position überführt, sodass der Riegel 32 wegklappbar ist, und der Königszapfen 21 vom Haltebereich 30 über die Führung 40 und den Mündungsbereich 38 wieder entkuppelt werden kann.

Außerdem zeigt Fig. 3 einen Bereich 46 einer Grundplatte 48, die am Sattelauflieger 18 im Wesentlichen eben ausgeführt ist, um auf der Auflagefläche 24, nämlich insbesondere den Reibbelägen 27, aufzuliegen. Die Grundplatte 48 weist zumindest den Bereich 46 mit einer im Wesentlichen ebenen Ausbildung auf, der einen Radius 50 aufweist, der mindestens dem maximalen Abstand 52 zwischen dem Zentrum 54 des Haltebereichs 30 zur Kontur 26 der Auflagefläche 24 entspricht. Hierdurch ist sichergestellt, dass bei Kurvenfahrten mit großen Knickwinkeln des Sattelaufliegers 18 stets die gesamte Auflagefläche 24 bzw. die Reibbeläge 27 in Kontakt mit der Grundplatte 48 stehen. Die Grundplatte 48 ist ein Teil 49 des Fahrzeuganhängers 12. Der Bereich 46 der Grundplatte 48 entspricht somit einem Bereich 55 der Sattelkupplung 20, der bei einer Kurvenfahrt immer vom Fahrzeuganhänger 12 überstrichten wird.

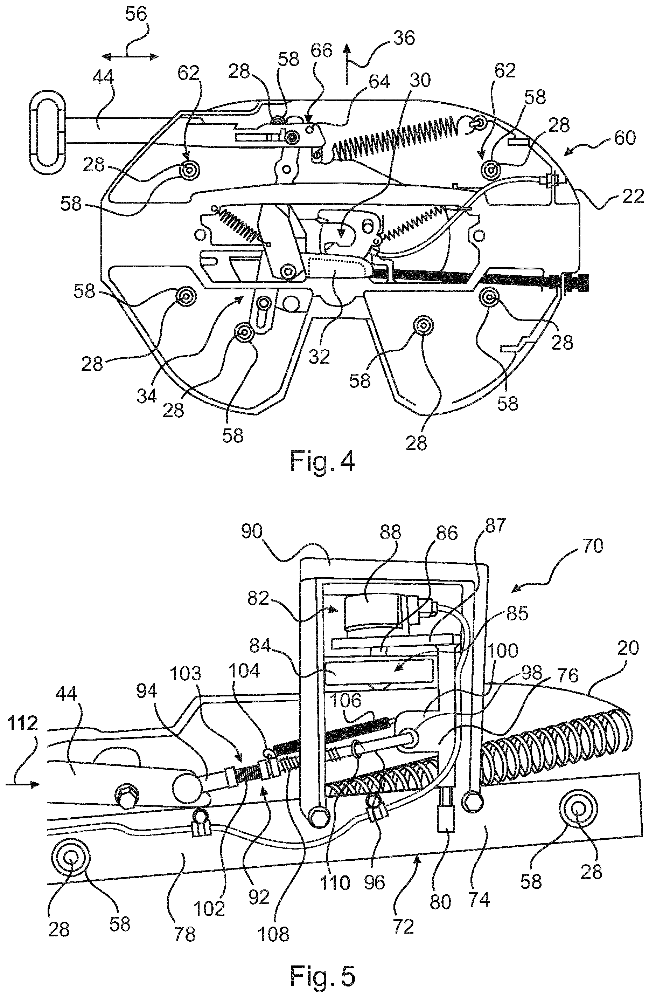

Fig. 4 zeigt die Satttelkupplung 20 von der Unterseite, wobei hier der Schließmechanismus 34 detaillierter dargestellt ist. Demnach ist erkennbar, dass der Betätigungshebel 44 in Querrichtung 56 der Sattelplatte 22 bewegbar ist, um über verschiedene weitere Hebel den Riegel 32 freizugeben oder zu fixieren. Ebenfalls sind in Fig. 4 die Bolzen 28, die jeweils mit einer Mutter 58 gesichert sind und auf der Auflagefläche 24 die Reibbeläge 27 halten, dargestellt.

Gemäß einem Ausführungsbeispiel der Erfindung dienen die Bolzen 28 im vorderen Bereich 60 der Sattelkupplung 20 als Befestigungspunkte 62 zum Befestigen eines Sensorsystems, das im Folgenden erläutert wird. Zudem weist der Betätigungshebel 44 eine Öffnung, insbesondere ein Bohrloch 64, auf, das ebenfalls zum Verbinden des Betätigungshebels 44 als Befestigungspunkt 66 zur Verbindung des später erläuterten Sensorsystems dient.

Fig. 5 zeigt nun das erfindungsgemäße Sensorsystem 70, das an einer Sattelkupplung 20, nämlich insbesondere den Bolzen 28 der Sattelkupplung 20 zur Befestigung der Reibbeläge 27, und dem Betätigungshebel 44 befestigt ist.

Das Sensorsystem 70 umfasst hierzu eine Halterung 72, die einen feststehenden Teil 74 und einen beweglichen Teil 76 aufweist. Der feststehende Teil 74 umfasst im Wesentlichen einen Steg 78, der mit beiden Bolzen 28, die als Befestigungspunkte 62, wie in Fig. 4 dargestellt, dienen, verbunden ist.

Der Steg 78 umfasst ein Lager 80, an dem der bewegliche Teil 76 drehbar gelagert ist. Der bewegliche Teil 76 ist auf der einen Seite mit dem Lager 80 verbunden und auf der anderen Seite ist eine Sensoreinheit 82 fest angeordnet. Die Sensoreinheit 82 umfasst ein Rad 84, das über eine Achse 86 mit einem Drehgeber 88 verbunden ist. Hierbei führt die Achse 86 durch eine Öffnung mit einem Lager in einer Halteplatte 85. Die Halteplatte 85 kann als Bestandteil der Sensoreinheit 82 oder des beweglichen Teils 76 betrachtet werden.. Das Rad 84 weist eine umlaufende Kontaktfläche 85 auf, die mit dem Fahrzeuganhänger 12 in Kontakt bringbar ist. Außerdem ist ein Schutz 90 für das Sensorsystem 70 dargestellt, der optional angebracht ist und vor unerwünschten Stößen auf das Sensorsystem 70 schützt.

Außerdem weist das Sensorsystem 70 einen Positioniermechanismus 92 auf. Der Positioniermechanismus 92 umfasst ein Verbindungsteil 94, das mit dem in Fig. 4 dargestellten Befestigungspunkt 66 des Betätigungshebels 44 verbunden ist. Das Verbindungsteil 14 ist mit einem Stab 96 verbunden, der durch eine Öffnung 98 in einem Hebel 100 des beweglichen Teils 76 führt. Die Öffnung 98 weist einen größeren Durchmesser als der Stab auf.

Außerdem ist ein Bereich des Stabs 96 mit einem Gewinde 102 versehen, auf das eine Mutter 104 aufgeschraubt ist. An der Mutter 104 ist eine Feder 106 verbunden, die ebenfalls mit dem Hebel 100 des beweglichen Teils 76 verbunden ist. Die Feder 106 ist vorzugsweise eine Zugfeder. Eine weitere Feder 108 ist auf dem Stab 96 angeordnet. Die weitere Feder 108 ist vorzugsweise eine Druckfeder. Zudem ist gegenüberliegend der Feder 108 zur Mutter 104 eine frei auf dem Stab bewegliche Scheibe 110 angeordnet. Die Mutter 104 und das Gewinde 102 sind Teil einer Justiereinrichtung 103.

Hier ist in Fig. 5 der bewegliche Teil 76 in einer Ruheposition dargestellt, in der gegenüber einer Betriebsposition, die später gezeigt wird, die Sensoreinheit 82 und der bewegliche Teil 76 unterhalb einer Ebene, die durch die Auflagefläche 24 gebildet ist, liegen. Diese Position wurde eingenommen, indem der Betätigungshebel 44 nach außen, vom Zentrum der Sattelkupplung 20 aus gesehen, gezogen ist. Hierdurch zieht die Feder 106 den Hebel 100 mit sich, sodass der bewegliche Teil 76 um das Lager 80 in die Ruheposition gedreht wird.

Im später gezeigten Fall, bei dem sich die Sensoreinheit 82 in einer Betriebsposition befindet, wird der Betätigungshebel 44 nach innen zum Zentrum gedrückt, also in Richtung 112, sodass über den Verbindungsteil 94 der Stab 96 des Positioniermechanismus 92 durch die Öffnung 98 geführt wird, bis die Scheibe 110 gegen den Rand der Öffnung 98 auf den Hebel 100 durch die Feder 108 gedrückt wird. Durch weiteres Bewegen des Betätigungshebels 44 in Richtung 112 wird dann eine Kraft auf den Hebel 100 ausgeübt, der den beweglichen Teil 76 mit dem Lager 80 um den feststehenden Teil 74 dreht. Somit wird die Sensoreinheit 82 dadurch derart bewegt, dass das Rad 84 oberhalb einer durch die Auflagefläche 24 der Sattelkupplung 20 gebildeten Ebene liegt und in Kontakt mit der Grundplatte 48 eines Sattelaufliegers 18 treten kann. Hierbei befinden sich der bewegliche Teil 76 und die Sensoreinheit 82 dann durch die Feder 108 gefedert in der Betriebsposition.

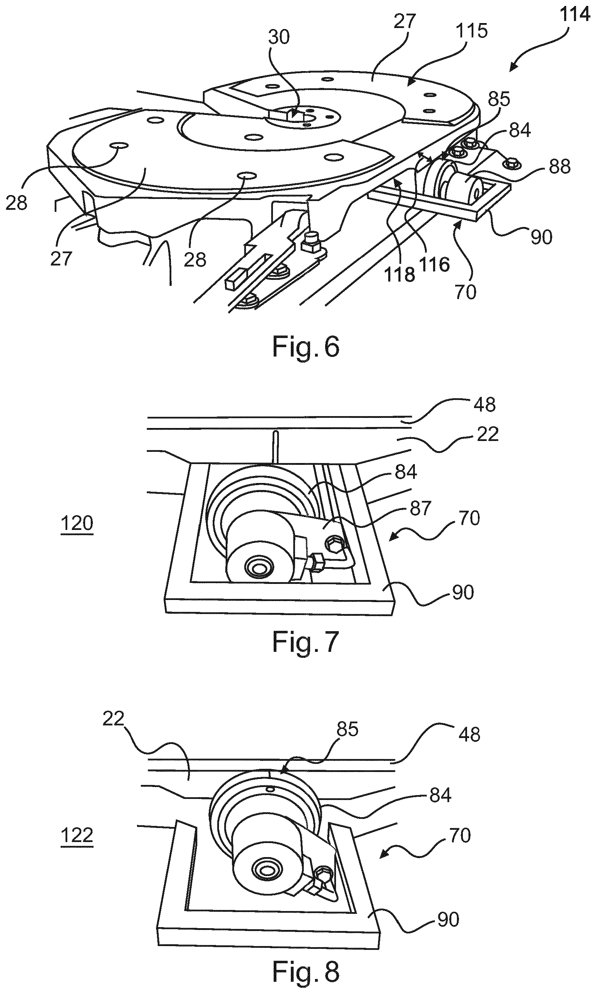

Fig. 6 zeigt eine perspektivische Ansicht eines Sattelkupplungssystems 114, das die Sattelkupplung 20 und das Sensorsystem 70 umfasst. Eine besonders vorteilhafte Anbauposition des Sensorsystems 70 vor der Sattelplatte 22 der Sattelkupplung 20, also auf einer Vorderseite 118 der Sattelkupplung 20, ist erkennbar. Demnach befindet sich das Sensorsystem 70 außerhalb der Auflagefläche 24 der Sattelkupplung 20 und ist durch die Halterung nahe der Auflagefläche 24 mit einem Abstand 116 zur Auflagefläche 24 von weniger als 10 cm angeordnet. Das Sensorsystem 70 befindet sich hier in einer Ruheposition, sodass das Rad 84 tiefer als eine durch die Auflagefläche 24 gebildete Ebene 115 liegt. Vor der Sattelkupplung 20 bedeutet also, auf der Vorderseite 118 der Sattelkupplung 20 angeordnet, die als die Seite der Sattelkupplung 20 definiert ist, die gegenüber dem Mündungsbereich 38 für den Königszapfen 21 angeordnet ist.

Fig. 7 zeigt eine weitere Ansicht des Sensorsystems 70, das in einer Ruheposition 120 ist. Hier ist nun zur Verdeutlichung der Ruheposition 120 auch die Grundplatte 48 eines Sattelaufliegers 18 dargestellt, die auf der Sattelplatte 22, nämlich auf der Auflagefläche 24 der Sattelplatte 22 mit den Reibbelägen 27 aufliegt. Die Sensoreinheit 70 steht nicht in Kontakt mit der Grundplatte 48, sondern ist beabstandet dazu.

Demgegenüber ist in Fig. 8 eine Betriebsposition 122 dargestellt, in der das Rad 84 in Kontakt mit der Grundplatte 48 des Sattelaufliegers 18 steht. Eine sich auf der Auflagefläche 24 aufliegende und bewegende Grundplatte 48 führt demnach zum Drehen des Rades 84, was dann mittels dem Drehgeber 88 detektierbar ist.

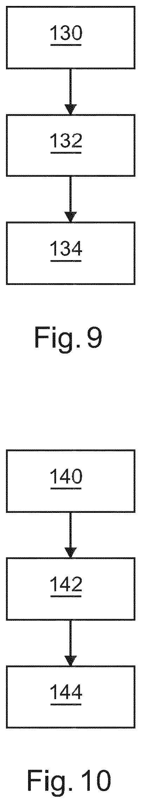

Fig. 9 zeigt exemplarisch die Schritte eines Verfahrens zum Anordnen eines Sensorsystems 70. Im ersten Schritt 130 wird ein feststehender Teil 74 einer Halterung 72 des Sensorsystems 70 mit Bolzen 28 einer Sattelkupplung 20 verbunden. Im Schritt 132 wird ein Verbindungsteil 94 eines Positioniermechanismus 92 des Sensorsystems 70 mit einem Befestigungspunkt 66 eines Betätigungshebels 44 eines Schließmechanismus 34 einer Sattelkupplung 20 verbunden. Im Schritt 134 wird durch einen Justiermechanismus 103, nämlich durch Verstellen einer Mutter 104 auf einem Gewinde 102, eine Ruheposition 120 und eine Betriebsposition 122 eingestellt.

Fig. 10 zeigt die Schritte eines Verfahrens zum Kuppeln eines Sattelaufliegers 18 mit einer Sattelzugmaschine 16. Im Schritt 140 wird ein Königszapfen 21 eines Sattelaufliegers 18 über einen Mündungsbereich 38 und eine Führung 40 in einen Haltebereich 30 einer Sattelkupplung 20 gebracht. Im Haltebereich 30 wird dann der Königszapfen 21 über einen Schließmechanismus 34 in einem Schritt 142 verriegelt. Im Schritt 144 wird ein Betätigungshebel 44 zur Betätigung des Schließmechanismus 34, nämlich zum Verriegeln des Riegels 32, des Schließmechanismus 34 umpositioniert, um hierdurch gleichzeitig die Sensoreinheit 82 und den beweglichen Teil 76 des Sensorsystems 70 in eine Betriebsposition 122 zu überführen.

### Bezugszeichenliste (Bestandteil der Beschreibung)

- 10: Nutzfahrzeug
- 12: Fahrzeuganhänger
- 14: Anhängerkupplung
- 15: Längsachse16 Sattelzugmaschine
- 17: Winkeländerung
- 18: Sattelauflieger
- 19: Längsachse
- 20: Sattelkupplung
- 21: Königszapfen
- 22: Sattelplatte
- 24: Auflagefläche
- 26: Kontur
- 27: Reibbeläge
- 28: Bolzen
- 30: Haltebereich
- 32: Riegel
- 34: Schließmechanismus
- 36: Längsrichtung
- 38: Mündungsbereich
- 40: Führung
- 42: Platte
- 44: Betätigungshebel
- 46: Bereich
- 48: Grundplatte
- 50: Radius
- 49: Teil des Fahrzeuganhängers
- 52: maximaler Abstand
- 54: Zentrum
- 55: Bereich
- 56: Querrichtung
- 58: Mutter
- 60: vorderer Bereich
- 62: Befestigungspunkte
- 64: Bohrloch
- 66: Befestigungspunkt
- 70: Sensorsystem
- 72: Halterung
- 74: feststehender Teil
- 76: beweglicher Teil
- 78: Steg
- 80: Lager
- 82: Sensoreinheit
- 84: Rad
- 85: Kontaktfläche des Rades
- 86: Achse
- 87: Halteplatte
- 88: Drehgeber
- 90: Schutz
- 92: Positioniermechanismus
- 94: Verbindungsteil
- 96: Stab
- 98: Öffnung
- 100: Hebel
- 102: Gewinde
- 103: Justiereinrichtung
- 104: Mutter
- 106: Feder
- 108: weitere Feder
- 110: Scheibe
- 112: Richtung
- 114: Sattelkupplungssystem
- 115: Ebene
- 116: Abstand
- 118: Vorderseite
- 120: Ruheposition
- 122: Betriebsposition
- 130-134: Schritte des Verfahrens zum Anordnen eines Sensorsystems
- 140-144: Schritte des Verfahrens zum Koppeln eines Sattelaufliegers

## Patentansprüche

1. Sensorsystem (70) für ein eine Sattelkupplung (20) aufweisendes Nutzfahrzeug (10), das als Sattelzugmaschine (16) ausgebildet ist, zum Bestimmen einer Winkeländerung (17) zwischen dem Nutzfahrzeug (10) und einem angehängten Fahrzeuganhänger (12), in Form eines Sattelaufliegers (18), umfassend:
- eine Sensoreinheit (82) mit
- einem Rad (84), das um eine Achse (86) drehbar gelagert ist, und
- einem Drehgeber (88), der mit dem Rad (84) verbunden ist, um eine Lageänderung des Rades (84) zu detektieren,
- eine Halterung (72) mit
- zumindest einem ersten feststehenden Teil (74) zum Verbinden des Sensorsystems (70) an dem Nutzfahrzeug (10) oder einem Teil davon und
- zumindest einem beweglichen Teil (76), der mit der Sensoreinheit (82) verbunden und am feststehenden Teil (74) beweglich, insbesondere drehbar, gelagert ist,
- einen Positioniermechanismus (92), zumindest zum gefederten Lagern des beweglichen Teils (76) in einer Betriebsposition (122), insbesondere so, dass das Rad (84) der mit dem beweglichen Teil (76) verbundenen Sensoreinheit (82) in Kontakt mit dem Fahrzeuganhänger (12) oder einem Teil (49) des Fahrzeuganhängers (12) bringbar ist,
wobei die Halterung (72) angepasst ist, zumindest in der Betriebsposition (122) das Rad (84) der Sensoreinheit (82) außerhalb einer Auflagefläche (24) der Sattelkupplung (14) neben der Auflagefläche (24) anzuordnen, insbesondere derart, dass eine Kontaktfläche (49) des Rades (84) in der Betriebsposition (122) in eine durch die Auflagefläche (24) gebildete Ebene (115) in einen Bereich (55) bringbar ist, der von einer Grundplatte (48) des Fahrzeuganhängers (12) überstreichbar ist, **dadurch gekennzeichnet, dass**, der Positioniermechanismus (92) ein Verbindungsteil (94) aufweist und das Verbindungsteil (94) mit einem Schließmechanismus (34), insbesondere einem Betätigungshebel (44) für den Schließmechanismus (34), der Sattelkupplung (20) des Nutzfahrzeugs (10) verbindbar ist, insbesondere so, dass beim Betätigen des Betätigungshebels (44) des Schließmechanismus (34) der Sattelkupplung (20) der bewegliche Teil (76) der Sensoreinheit zwischen der Betriebsposition (122) und der Ruheposition (120) überführbar ist.

2. Sensorsystem (70) nach Anspruch 1, wobei die Halterung (72) angepasst ist, zumindest in der Betriebsposition (122) das Rad (84) oder die Kontaktfläche (49) des Rades (84) in einem Abstand (116) von weniger als 0,2 m oder weniger als 0,1 m zu einer Kontur (26) der Auflagefläche (24) anzuordnen.

3. Sensorsystem (70) nach Anspruch 1 oder 2, wobei der Positioniermechanismus (92) eingerichtet ist, den beweglichen Teil (76) der Halterung (72) in eine Ruheposition (120) zu überführen, die unterschiedlich zur Betriebsposition (122) ist, insbesondere derart, dass das Rad (84) der mit dem beweglichen Teil (76) der Halterung (72) verbundenen Sensoreinheit (82) beabstandbar zu dem Fahrzeuganhänger (12) ist.

4. Sensorsystem (70) nach einem der vorhergehenden Ansprüche, wobei die Halterung (72) angepasst ist, mit der Sattelkupplung (20) verbunden zu werden, die eine Sattelplatte (22) mit einem Haltebereich (30) aufweist, in der ein Königszapfen (21) einkuppelbar ist, wobei die Halterung (72) angepasst ist, das Rad (84) der Sensoreinheit (82) zumindest in der Betriebsposition (122) in einem Abstand zum Haltebereich (30) zu halten, der geringer ist als der maximale Abstand (52) einer Kontur (26) einer Auflagefläche (24) der Sattelplatte (22) zum Haltebereich (30).

5. Sensorsystem (70) nach einem der vorhergehenden Ansprüche, wobei die Halterung (72) angepasst ist, mit der Sattelkupplung (20) des Nutzfahrzeugs (10) verbunden zu werden, sodass das Rad (84) der Sensoreinheit (82) durch den beweglichen Teil (76) zumindest in der Betriebsposition (122) vor der Auflagefläche (24) gegenüber einem Mündungsbereich (38) einer bis zu dem Haltebereich (30) führenden Führung (40) der Sattelkupplung (20) für einen Königszapfen (21) oder in der Führung (40) anordenbar ist, insbesondere so, dass zumindest in der Betriebsposition (122) die Achse (86) des Rades (84) radial zum Zentrum (54) des Haltebereichs (30) verläuft.

6. Sensorsystem (70) nach einem der vorhergehenden Ansprüche, wobei der feststehende Teil (74) der Halterung (72) angepasst ist, mit Bolzen (28) der Sattelkupplung (20), die zur Befestigung von Reibbelägen (27) dienen, befestigt zu werden.

7. Sensorsystem (70) nach einem der vorhergehenden Ansprüche, wobei der Positioniermechanismus (92), insbesondere der Verbindungsteil (94), eine Justiereinrichtung (103) umfasst, um zumindest die Betriebsposition (122) und/oder die Ruheposition (120) zu verändern.

8. Sattelkupplungssystem (114) eines Nutzfahrzeugs (10), das als Sattelzugmaschine (16) ausgebildet ist, mit einer Sattelkupplung (20) und einem Sensorsystem (70) nach einem der vorgehenden Ansprüche, wobei der feststehende Teil (74) des Sensorsystems (70) mit dem Nutzfahrzeug (10) oder einem Teil (49) davon verbunden ist und das Rad (84) zumindest in der Betriebsposition (122) mit der Halterung (72) außerhalb der Auflagefläche (24) der Anhängerkupplung (14) neben der Auflagefläche (24) angeordnet ist, insbesondere derart, dass eine Kontaktfläche (49) des Rades (84) in der Betriebsposition (122) in einer durch die Auflagefläche (24) gebildeten Ebene (115) in einem Bereich (55) liegt, der von einer Grundplatte (48) des Fahrzeuganhängers (12) überstreichbar ist, **dadurch gekennzeichnet, dass** das drehbar gelagerte, starre Verbindungsteil (94) des Positioniermechanismus (92) des Sensorsystems (70), zumindest zum gefederten Lagern eines beweglichen Teils (76) in einer Betriebsposition (122), insbesondere so, dass das Rad (84) der mit dem beweglichen Teil (76) verbundenen Sensoreinheit (82) in Kontakt mit einem Fahrzeuganhänger (12) oder einem Teil (49) des Fahrzeuganhängers (12) bringbar ist, mit einem Schließmechanismus (34), insbesondere einem Betätigungshebel (44) des Schließmechanismus (34) der Sattelkupplung (20), verbunden ist.

9. Sattelkupplungssystem (114) nach Anspruch 8, wobei die Halterung (72) das Rad (84) oder die Kontaktfläche (49) des Rades (84) zumindest in der Betriebsposition (122) in einem Abstand (116) zu einer Kontur (26) der Auflagefläche (24) von weniger als 0,2 m oder weniger als 0,1 m anordnet.

10. Sattelkupplungssystem (114) nach Anspruch 8 oder 9, wobei die Halterung (72) der Sensoreinheit (82) mit der Sattelkupplung (20) verbunden ist, und die Sattelkupplung (20) eine Sattelplatte (22) mit einem Haltebereich (30) aufweist, in den ein Königszapfen (21) einkuppelbar ist, wobei die Halterung (72) das Rad (84) in der Betriebsposition (122) in einem Abstand (116) zum Haltebereich (30) hält, der geringer ist als der maximale Abstand (52) der Kontur (26) der Auflagefläche (24) zum Haltebereich (30).

11. Sattelkupplungssystem (114) nach einem der Ansprüche 8 bis 10, wobei die Sattelkupplung (20) mit der Halterung (72) derart verbunden ist, dass das Rad (84) zumindest in der Betriebsposition (122) vor der Auflagefläche (24) gegenüber dem Mündungsbereich (38) einer bis zu dem Haltebereich (30) führenden Führung (40) der Sattelkupplung (20) oder in der Führung (40) angeordnet ist, wobei die Achse (86) des Rades (84) insbesondere radial zum Zentrum (54) des Haltebereichs (30) verläuft.

12. Sattelkupplungssystem (114) nach einem der Ansprüche 8 bis 11, wobei die Sattelkupplung (20) einen Schließmechanismus (34) aufweist und der Schließmechanismus (34) eingerichtet ist, einen Königszapfen (21) eines Sattelaufliegers (18) mit der Sattelkupplung (20) einzukuppeln oder freizugeben und der Schließmechanismus (34) mit dem Verbindungsteil (94) des Positioniermechanismus (92) des Sensorsystems (70) verbunden ist und/oder
wobei die Sattelkupplung (20) Bolzen (28) zur Befestigung von Reibbelägen (27) aufweist und der feststehende Teil (74) der Halterung (72) mit den Bolzen (28) an der Sattelkupplung (20) befestigt ist.

13. Nutzfahrzeug (10), nämlich Sattelzugmaschine (16), mit einem Sattelkupplungssystem (114) nach einem der Ansprüche 8 bis 12.

14. Verfahren zum Anordnen eines Sensorsystems (70) nach einem der Ansprüche 1 bis 7 an einer Sattelkupplung (20) für ein Nutzfahrzeug (10), umfassend die Schritte:
Verbinden (130) des feststehenden Teils (74) der Halterung (72) des Sensorsystems (70) mit Bolzen (28) zur Befestigung von Reibbelägen (27) der Sattelkupplung (20) und
Verbinden (132) des Verbindungsteils (94) des Positioniermechanismus (92) mit einem Schließmechanismus (34), insbesondere einem Betätigungshebel (44) des Schließmechanismus (34), der Sattelkupplung (20).

15. Verfahren nach Anspruch 14, wobei nach dem Verbinden eine Betriebsposition (122) und/oder eine Ruheposition (120) mit einer Justiereinrichtung (103) eingestellt (134) wird.

## Claims

1. Sensor system (70) for a commercial vehicle (10) having a fifth-wheel coupling (20), which vehicle is designed as a tractor unit (16), for determining an angle change (17) between the commercial vehicle (10) and an attached vehicle trailer (12), in the form of a semi-trailer (18), comprising:
- a sensor unit (82) having
- a wheel (84) which is rotatably mounted about an axle (86), and
- a rotary encoder (88) which is connected to the wheel (84) in order to detect a change in the position of the wheel (84),
- a holder (72) having
- at least a first stationary part (74) for connecting the sensor system (70) to the commercial vehicle (10) or a part thereof and
- at least one movable part (76) which is connected to the sensor unit (82) and is movably, in particular rotatably, mounted on the stationary part (74),
- a positioning mechanism (92), at least for spring-mounting the movable part (76) in an operating position (122), in particular such that the wheel (84) of the sensor unit (82) connected to the movable part (76) can be brought into contact with the vehicle trailer (12) or a part (49) of the vehicle trailer (12),
the holder (72) being adapted to arrange the wheel (84) of the sensor unit (82) outside a support surface (24) of the fifth-wheel coupling (14) next to the support surface (24), at least in the operating position (122), in particular in such a way that in the operating position (122) a contact surface (49) of the wheel (84) can be brought into a plane (115) formed by the support surface (24), into a region (55) which can be swept over by a base plate (48) of the vehicle trailer (12), **characterized in that** the positioning mechanism (92) has a connecting part (94) and the connecting part (94) can be connected to a locking mechanism (34), in particular an actuating lever (44) for the locking mechanism (34), of the fifth-wheel coupling (20) of the commercial vehicle (10), in particular such that when the actuating lever (44) of the locking mechanism (34) of the fifth-wheel coupling (20) is actuated, the movable part (76) of the sensor unit can be moved between the operating position (122) and the rest position (120).

2. Sensor system (70) according to claim 1, wherein the holder (72) is adapted to arrange the wheel (84) or the contact surface (49) of the wheel (84) at a distance (116) of less than 0.2 m or less than 0.1 m from a contour (26) of the support surface (24), at least in the operating position (122).

3. Sensor system (70) according to claim 1 or 2, wherein the positioning mechanism (92) is configured to move the movable part (76) of the holder (72) into a rest position (120) which is different from the operating position (122), in particular in such a way that the wheel (84) of the sensor unit (82) connected to the movable part (76) of the holder (72) can be spaced apart from the vehicle trailer (12).

4. Sensor system (70) according to any of the preceding claims, wherein the holder (72) is adapted to be connected to the fifth-wheel coupling (20) which has a fifth-wheel plate (22) having a holding region (30), in which a kingpin (21) can be coupled, wherein the holder (72) is adapted to hold the wheel (84) of the sensor unit (82), at least in the operating position (122), at a distance to the holding region (30) which is less than the maximum distance (52) from a contour (26) of a support surface (24) of the fifth-wheel plate (22) to the holding region (30).

5. Sensor system (70) according to any of the preceding claims, wherein the holder (72) is adapted to be connected to the fifth-wheel coupling (20) of the commercial vehicle (10), with the result that the movable part (76), at least in the operating position (122), can arrange the wheel (84) of the sensor unit (82) in front of the support surface (24) opposite an opening region (38) of a guide (40) of the fifth-wheel coupling (20) for a kingpin (21), which guide leads to the holding region (30), or in the guide (40), in particular such that at least in the operating position (122) the axle (86) of the wheel (84) extends radially with respect to the center (54) of the holding region (30).

6. Sensor system (70) according to any of the preceding claims, wherein the stationary part (74) of the holder (72) is adapted to be fastened using bolts (28) of the fifth-wheel coupling (20) which are used to fasten friction linings (27).

7. Sensor system (70) according to any of the preceding claims, wherein the positioning mechanism (92), in particular the connecting part (94), comprises an adjustment device (103) in order to alter at least the operating position (122) and/or the rest position (120).

8. Fifth-wheel coupling system (114) for a commercial vehicle (10), which vehicle is designed as a tractor unit (16), having a fifth-wheel coupling (20) and a sensor system (70) according to any of the preceding claims, the stationary part (74) of the sensor system (70) being connected to the commercial vehicle (10) or a part (49) thereof, and the wheel (84) being arranged with the holder (72) outside the support surface (24) of the trailer coupling (14) next to the support surface (24), at least in the operating position (122), in particular in such a way that in the operating position (122) a contact surface (49) of the wheel (84) lies in a plane (115) formed by the support surface (24), in a region (55) which can be swept over by a base plate (48) of the vehicle trailer (12), **characterized in that** the rotatably mounted, rigid connecting part (94) of the positioning mechanism (92) of the sensor system (70), at least for spring-mounting a movable part (76) in an operating position (122), in particular such that the wheel (84) of the sensor unit (82) connected to the movable part (76) can be brought into contact with a vehicle trailer (12) or a part (49) of the vehicle trailer (12), is connected to a locking mechanism (34), in particular an actuating lever (44) of the locking mechanism (34) of the fifth-wheel coupling (20).

9. Fifth-wheel coupling system (114) according to claim 8, wherein the holder (72) arranges the wheel (84) or the contact surface (49) of the wheel (84) at a distance (116) from a contour (26) of the support surface (24) of less than 0.2 m or less than 0.1 m, at least in the operating position (122).

10. Fifth-wheel coupling system (114) according to claim 8 or 9, wherein the holder (72) of the sensor unit (82) is connected to the fifth-wheel coupling (20), and the fifth-wheel coupling (20) has a fifth-wheel plate (22) having a holding region (30) into which a kingpin (21) can be coupled, wherein the holder (72) holds the wheel (84), in the operating position (122), at a distance (116) from the holding region (30) which is less than the maximum distance (52) from the contour (26) of the support surface (24) to the holding region (30).

11. Fifth-wheel coupling system (114) according to any of claims 8 to 10, wherein the fifth-wheel coupling (20) is connected to the holder (72) in such a way that at least in the operating position (122) the wheel (84) is arranged in front of the support surface (24) opposite the opening region (38) of a guide (40) of the fifth-wheel coupling (20), which guide leads to the holding region (30), or in the guide (40), wherein the axle (86) of the wheel (84) extends in particular radially with respect to the center (54) of the holding region (30).

12. Fifth-wheel coupling system (114) according to any of claims 8 to 11, wherein the fifth-wheel coupling (20) has a locking mechanism (34) and the locking mechanism (34) is configured to couple a kingpin (21) of a semi-trailer (18) into the fifth-wheel coupling (20) or to release it therefrom, and the locking mechanism (34) is connected to the connecting part (94) of the positioning mechanism (92) of the sensor system (70) and/or
wherein the fifth-wheel coupling (20) has bolts (28) for fastening friction linings (27) and the stationary part (74) of the holder (72) is fastened to the fifth-wheel coupling (20) using the bolts (28).

13. Commercial vehicle (10), specifically a tractor unit (16), having a fifth-wheel coupling system (114) according to any of claims 8 to 12.

14. Method for arranging a sensor system (70) according to any of claims 1 to 7 on a fifth-wheel coupling (20) for a commercial vehicle (10), comprising the steps of:
connecting (130) the stationary part (74) of the holder (72) of the sensor system (70) to bolts (28) for fastening friction linings (27) of the fifth-wheel coupling (20) and
connecting (132) the connecting part (94) of the positioning mechanism (92) to a locking mechanism (34), in particular an actuating lever (44) of the locking mechanism (34), of the fifth-wheel coupling (20).

15. Method according to claim 14, wherein after the connecting steps an operating position (122) and/or a rest position (120) is set (134) using an adjustment device (103).

## Revendications

1. Système de capteurs (70) pour un véhicule utilitaire (10) présentant une sellette d'attelage (20), lequel véhicule utilitaire est réalisé en tant que tracteur de semi-remorque (16), pour la détermination d'un changement d'angle (17) entre le véhicule utilitaire (10) et une remorque de véhicule (12) attelée, en tant que semi-remorque (18), comprenant :
- une unité à capteur (82) comportant
- une roue (84) montée de manière à pouvoir tourner autour d'un axe (86), et
- un capteur de rotation (88) qui est connecté à la roue (84) afin de détecter un changement de position de la roue (84),
- un support (72) comportant
- au moins une première partie fixe (74) pour la liaison du système de capteurs (70) au véhicule utilitaire (10) ou à une partie de celui-ci et
- au moins une partie mobile (76) qui est reliée à l'unité à capteur (82) et qui est montée de manière à être mobile, en particulier de manière à pouvoir tourner, sur la partie fixe (74),
- un mécanisme de positionnement (92), au moins pour le montage élastique de la partie mobile (76) dans une position de fonctionnement (122), en particulier de sorte que la roue (84) de l'unité à capteur (82) reliée à la partie mobile (76) peut être amenée en contact avec la remorque de véhicule (12) ou une partie (49) de la remorque de véhicule (12),
dans lequel le support (72) est adapté pour disposer, au moins dans la position de fonctionnement (122), la roue (84) de l'unité à capteur (82) à l'extérieur d'une surface d'appui (24) de la sellette d'attelage (14) à côté de la surface d'appui (24), en particulier de telle sorte qu'une surface de contact (49) de la roue (84) peut être amenée, dans la position de fonctionnement (122), dans un plan (115) formé par la surface d'appui (24) dans une zone (55) qui peut être recouverte par une plaque de base (48) de la remorque de véhicule (12), **caractérisé en ce que** le mécanisme de positionnement (92) présente
une partie de liaison (94) et la partie de liaison (94) peut être reliée à un mécanisme de fermeture (34), en particulier à un levier d'actionnement (44) pour le mécanisme de fermeture (34), de la sellette d'attelage (20) du véhicule utilitaire (10), en particulier de sorte que, lors de l'actionnement du levier d'actionnement (44) du mécanisme de fermeture (34) de la sellette d'attelage (20), la partie mobile (76) de l'unité à capteur peut être transférée entre la position de fonctionnement (122) et la position de repos (120).

2. Système de capteurs (70) selon la revendication 1, dans lequel le support (72) est adapté pour disposer, au moins dans la position de fonctionnement (122), la roue (84) ou la surface de contact (49) de la roue (84) à une distance (116) de moins de 0,2 m ou de moins de 0,1 m par rapport à un contour (26) de la surface d'appui (24).

3. Système de capteurs (70) selon la revendication 1 ou 2, dans lequel le mécanisme de positionnement (92) est conçu pour amener la partie mobile (76) du support (72) dans une position de repos (120) qui est différente de la position de fonctionnement (122), en particulier de telle sorte que la roue (84) de l'unité à capteur (82) reliée à la partie mobile (76) du support (72) peut être espacée de la remorque de véhicule (12).

4. Système de capteurs (70) selon l'une des revendications précédentes, dans lequel le support (72) est adapté pour être relié à la sellette d'attelage (20) qui présente une plaque de sellette (22) comportant une zone de support (30) dans laquelle un pivot central (21) peut être accouplé, dans lequel le support (72) est adapté pour maintenir la roue (84) de l'unité à capteur (82), au moins dans la position de fonctionnement (122), à une distance par rapport à la zone de support (30) qui est inférieure à la distance maximale (52) entre un contour (26) d'une surface d'appui (24) de la plaque de sellette (22) et la zone de support (30).

5. Système de capteurs (70) selon l'une des revendications précédentes, dans lequel le support (72) est adapté pour être relié à la sellette d'attelage (20) du véhicule utilitaire (10), de sorte que la roue (84) de l'unité à capteur (82) peut être disposée par la partie mobile (76), au moins dans la position de fonctionnement (122), devant la surface d'appui (24) par rapport à une zone d'embouchure (38) d'un guide (40) de la sellette d'attelage (20) pour un pivot central (21), lequel guide mène jusqu'à la zone de support (30), ou dans le guide (40), en particulier de sorte qu'au moins dans la position de fonctionnement (122), l'axe (86) de la roue (84) s'étend radialement par rapport au centre (54) de la zone de support (30).

6. Système de capteurs (70) selon l'une des revendications précédentes, dans lequel la partie fixe (74) du support (72) est adaptée pour être fixée avec des boulons (28) de la sellette d'attelage (20) servant à fixer des garnitures de friction (27).

7. Système de capteurs (70) selon l'une des revendications précédentes, dans lequel le mécanisme de positionnement (92), en particulier la partie de liaison (94), comprend un dispositif d'ajustement (103) pour modifier au moins la position de fonctionnement (122) et/ou la position de repos (120).

8. Système à sellette d'attelage (114) d'un véhicule utilitaire (10) réalisé comme un tracteur de semi-remorque (16), comportant une sellette d'attelage (20) et un système de capteurs (70) selon l'une des revendications précédentes, dans lequel la partie fixe (74) du système de capteurs (70) est reliée au véhicule utilitaire (10) ou à une partie (49) de celui-ci et la roue (84) est disposée, au moins dans la position de fonctionnement (122), avec le support (72) à l'extérieur de la surface d'appui (24) de l'attelage de remorque (14) à côté de la surface d'appui (24), en particulier de telle sorte qu'une surface de contact (49) de la roue (84) se trouve, dans la position de fonctionnement (122), dans un plan (115) formé par la surface d'appui (24) dans une zone (55) qui peut être recouverte par une plaque de base (48) de la remorque de véhicule (12), **caractérisé en ce que** la partie de liaison (94) rigide et montée de manière à pouvoir tourner du mécanisme de positionnement (92) du système de capteurs (70) est reliée à un mécanisme de fermeture (34), en particulier à un levier d'actionnement (44) du mécanisme de fermeture (34), de la sellette d'attelage (20), au moins pour le montage élastique d'une partie mobile (76) dans une position de fonctionnement (122), en particulier de sorte que la roue (84) de l'unité à capteur (82) reliée à la partie mobile (76) peut être amenée en contact avec une remorque de véhicule (12) ou une partie (49) de la remorque de véhicule (12).

9. Système à sellette d'attelage (114) selon la revendication 8, dans lequel le support (72) place la roue (84) ou la surface de contact (49) de la roue (84), au moins dans la position de fonctionnement (122), à une distance (116) inférieure à 0,2 m ou inférieure à 0,1 m par rapport à un contour (26) de la surface d'appui (24).

10. Système à sellette d'attelage (114) selon la revendication 8 ou 9, dans lequel le support (72) de l'unité à capteur (82) est relié à la sellette d'attelage (20), et la sellette d'attelage (20) présente une plaque de sellette (22) comportant une zone de support (30) dans laquelle un pivot central (21) peut être accouplé, dans lequel le support (72) maintient la roue (84), dans la position de fonctionnement (122), à une distance (116) par rapport à la zone de support (30) qui est inférieure à la distance maximale (52) entre le contour (26) de la surface d'appui (24) et la zone de support (30).

11. Système à sellette d'attelage (114) selon l'une des revendications 8 à 10, dans lequel la sellette d'attelage (20) est reliée au support (72) de telle sorte que la roue (84) est disposée, au moins dans la position de fonctionnement (122), devant la surface d'appui (24) par rapport à la zone d'embouchure (38) d'un guide (40) de la sellette d'attelage (20) menant jusqu'à la zone de support (30) ou dans le guide (40), dans lequel l'axe (86) de la roue (84) s'étend en particulier radialement par rapport au centre (54) de la zone de support (30).

12. Système à sellette d'attelage (114) selon l'une des revendications 8 à 11, dans lequel la sellette d'attelage (20) présente un mécanisme de fermeture (34) et le mécanisme de fermeture (34) est conçu pour accoupler un pivot central (21) d'une semi-remorque (18) avec la sellette d'attelage (20) ou pour le libérer de celle-ci et le mécanisme de fermeture (34) est relié à la partie de liaison (94) du mécanisme de positionnement (92) du système de capteurs (70) et/ou
dans lequel la sellette d'attelage (20) présente des boulons (28) pour la fixation de garnitures de friction (27) et la partie fixe (74) du support (72) est fixée à la sellette d'attelage (20) par les boulons (28).

13. Véhicule utilitaire (10), à savoir tracteur de semi-remorque (16), comportant un système à sellette d'attelage (114) selon l'une des revendications 8 à 12.

14. Procédé pour la disposition d'un système de capteurs (70) selon l'une des revendications 1 à 7 sur une sellette d'attelage (20) pour un véhicule utilitaire (10), comprenant les étapes consistant à :
relier (130) la partie fixe (74) du support (72) du système de capteurs (70) à des boulons (28) pour la fixation de garnitures de friction (27) de la sellette d'attelage (20) et
relier (132) la partie de liaison (94) du mécanisme de positionnement (92) à un mécanisme de fermeture (34), en particulier à un levier d'actionnement (44) du mécanisme de fermeture (34), de la sellette d'attelage (20).

15. Procédé selon la revendication 14, dans lequel, après la liaison, une position de fonctionnement (122) et/ou une position de repos (120) sont réglées (134) avec un dispositif d'ajustement (103).
